# EUROPÄISCHE PATENTSCHRIFT

(11) **EP 1 512 920 B1**
(45) Veröffentlichungstag und Bekanntmachung des Hinweises auf die Patenterteilung: **31.01.2007**
(21) Anmeldenummer: 03020139.6
(22) Anmeldetag: 05.09.2003
(51) Int. Cl.: F24F 6/14

(54) **LUFTBEFEUCHTUNGSVORRICHTUNG**
AIR HUMIDIFYING DEVICE
DISPOSITIF D'HUMIDIFICATION D'AIR

(43) Veröffentlichungstag der Anmeldung: 09.03.2005
(73) Patentinhaber: Michelbach, Ludwig, 90513 Zirndorf (DE)
(72) Erfinder: Michelbach, Ludwig, 90513 Zirndorf (DE)
(74) Vertreter: Zech, Stefan Markus

(56) Entgegenhaltungen:
- DE-A- 10 105 397
- DE-C- 19 614 446
- DE-C- 19 807 683
- GB-A- 774 604
- US-A- 2 921 747
- US-A- 4 830 046
- US-A- 5 441 202
- US-A- 5 765 752
- US-A1- 2003 034 072

## Beschreibung

Die Erfindung betrifft eine Luftbefeuchtungsvorrichtung umfassend wenigstens eine Hochdruckpumpe mit einem Pumpeneingang und einem Pumpenausgang und mindestens zwei Gruppen von Einspritzmitteln, wobei die Hochdruckpumpe den Einspritzmitteln bedarfsweise Wasser zuführt, insbesondere zur direkten oder indirekten Befeuchtung eines Raumes oder zu Kühlzwecken, nach dem Oberbegriff von Patentanspruch 1. Weiter betrifft die Erfindung noch ein Einspritzmittel zum Einspritzen von Befeuchtungsfluid in Luft, vorzugsweise in einen Luftstrom, insbesondere zur direkten oder indirekten Befeuchtung eines Raumes oder zu Kühlzwecken, insbesondere zur Verwendung in einer Luftbefeuchtungsvorrichtung nach Patentanspruch 1.

Bei der Luftbefeuchtung mittels gesteuerter bzw. geregelter Einspritzung von Befeuchtungsfluid in Luft besteht generell das Problem, dass ein optimaler Eintrag von Befeuchtungsfluid sowohl bei niedrigen als auch bei hohen Einbringungsmengen angestrebt wird. Während die Einspritzmittel meist bei höheren Einspritzdrücken äußerst zufriedenstellend arbeiten, ist es bei niedrigen Drücken oftmals schwierig, eine gewünschte Sprühcharakteristik aufrecht zu erhalten bzw. ein Tröpfeln an den Einspritzmitteln mit ausreichender Sicherheit zu vermeiden.

Aus der DE 198 07 683 C1 ist bereits eine Lösung für das angesprochene Problem bekannt. Die dort offenbarte Lösung ist jedoch in dem Sinne aufwendig als eine permanente Druckerfassung und Ansteuerung von Ventilen in Abhängigkeit des Druckes bzw. der auszubringenden Befeuchtungsfluidmenge mittels einer Steuer- oder Regeleinheit notwendig ist.

Die Aufgabe der vorliegenden Erfindung besteht darin, eine Luftbefeuchtungsvorrichtung anzugeben, bei der die Einspritzmittel sowohl bei einer niedrigen als auch bei einer hohen Einbringungsmenge optimal arbeiten.

Diese Aufgabe wird mit einer Luftbefeuchtungsvorrichtung nach den Merkmalen des Patentanspruchs 1 gelöst. Vorteilhafte Weiterbildungen sind in den Unteransprüchen angegeben.

Ein Kerngedanke der vorliegenden Erfindung besteht darin, dass Einspritzmittel verschiedener Gruppen so ausgebildet und angeschlossen sind, dass sie bei unterschiedlichen Schwellendrücken P_{A1}, P_{B1}, ... P_{G1} selbständig öffnen bzw. dass die Einspritzmittel eine mit definierter Vorspannung beaufschlagte Ventileinrichtung umfassend einen Ventilkolben und einen Ventilsitz aufweisen, wobei die Ventileinrichtung erst bei einem vorbestimmten Schwellendruck öffnet und dabei eine Fluidverbindung zwischen Fluideinlass und Fluidauslass bewirkt.

Während beim eingangs genannten Stand der Technik externe Mittel vorgesehen waren, um eine bestimmte Gruppe von Einspritzmitteln zu- oder abzuschalten, sind erfindungsgemäß nun die Einspritzmittel so ausgestaltet, dass sie sich selbstständig zu- bzw. abschalten.

In einer konkreten Ausführungsform ist die Luftbefeuchtungsvorrichtung derart ausgebildet, dass die Einspritzmittel einer ersten Gruppe bei einem Schwellendruck P_{A1} < 10 bar, insbesondere < 1 bar, insbesondere sofort bei Wasserzufuhr durch die Hochdruckpumpe öffnen, wobei die Einspritzmittel einer zweiten und ggf. weiteren Gruppen bei P_{A1} zunächst geschlossen bleiben. Im untersten Druckregime übernimmt daher nur eine erste Gruppe von Einspritzmitteln die Einbringung von Befeuchtungsfluid, wohingegen eine zweite oder weitere Gruppen von Einspritzmitteln zunächst inaktiv bleiben. Nach einer Kernüberlegung der vorliegenden Erfindung kann dabei das Befeuchtungsfluid, wenn insgesamt nur wenig Befeuchtungsfluid einzubringen ist, durch die begrenzte Anzahl von Einspritzmitteln der ersten Gruppe mit dann entsprechend höherem Druck eingebracht werden, als wenn alle Einspritzmittel der gesamten Luftbefeuchtungsvorrichtung sofort aktiv wären.

In einer bevorzugten Ausgestaltung sind die Einspritzmittel derartig ausgebildet, dass sie in geöffnetem Zustand bei abfallendem Druck bei einem Schließdruck P_{A2}, P_{B2}, ..., P_{G2} schließen, wobei der jeweilige Schließdruck den jeweiligen Schwellendruck P_{A1}, P_{B1}, ... P_{G1} um nicht mehr als 10 bar, vorzugsweise um nicht mehr als 3 bar unterschreitet. Die Einspritzmittel werden vorzugsweise im Wesentlichen so ausgebildet, dass der Schließdruck P_{A2}, P_{B2}, ..., P_{G2} dem jeweiligen Schwellendruck P_{A1}, P_{B1}, ... P_{G1} entspricht.

In einer weiteren konkreten Ausgestaltung können mindestens drei bis sieben Gruppen von Einspritzmitteln mit unterschiedlichen Schwellendrücken vorgesehen sein, wobei die Einspritzmittel der verschiedenen Gruppen derart ausgebildet und angeschlossen sein können, dass sich die Schwellen-drücke der verschiedenen Gruppen um mindestens 10 bar, vorzugsweise um mindestens 15 bar unterscheiden.

Weiter bevorzugt wird es, wenn die Schwellendrücke der einzelnen Einspritzmittel im Wesentlichen in gleichen Schritten ansteigen bzw. wenn die Schließdrücke ebenfalls korrespondierend hierzu im Wesentlichen in gleichen Schritten abfallen.

Die in einer fakultativen Ausgestaltung vorgeschlagenen Einspritzmittel zeichnen sich dadurch aus, dass sie selbstständig bei einem vorbestimmten Schwellendruck öffnen bzw. selbstständig bei einem vorbestimmten Schließdruck schließen. Das selbstständige Öffnen bzw. Schließen der Einspritzmittel erfolgt ohne externe, insbesondere elektronische Steuereinrichtungen, sondern nach einem bevorzugten Aspekt der vorliegenden Erfindung rein mechanisch.

In einer konkreten Ausgestaltung kann eine mit Vorspannung beaufschlagte Ventileinrichtung eine Feder, insbesondere eine Spiralfeder umfassen, welche die definierte Vorspannung bereitstellt. Die Feder, insbesondere die Spiralfeder ist so voreingestellt, dass sie eine Öffnung der Ventileinrichtung bei einem gewünschten Schwellendruck bzw. ein Schließen bei einem gewünschten Schließdruck gewährleistet.

Nach einem weiteren Aspekt der vorliegenden fakultativen Ausgestaltung wird der Ventilkolben gegen die Strömungsrichtung des Befeuchtungsfluids durch die Vorspannung, insbesondere die Feder bzw. Spiralfeder in Richtung auf den Ventilsitz beaufschlagt. Das Befeuchtungsfluid strömt damit gegen ein dem Ventilsitz zugeordnetes Ende des Ventilkolbens bzw. der Ventilkolben ist in Offenstellung strömungsabseitig des Ventilsitzes angeordnet.

Vorzugsweise können die Einspritzmittel zwischen Fluidauslass und Ventileinrichtung noch eine Drallerzeugungseinrichtung umfassen, um einem erzeugten Sprühstrahl von Befeuchtungsfluid einen gewünschten Drall aufzuprägen.

In einer bevorzugten Ausgestaltung, die allerdings nicht zwingend ist, sind der Fluidauslass mit der düsenartigen Verengung und die Ventileinrichtung in einer gemeinsamen Baueinheit, insbesondere in einem gemeinsamen Düsengehäuse untergebracht. Dies ergibt eine kompakte Einheit, so dass sich die erfindungsgemäßen Einspritzmittel leicht innerhalb einer Luftbefeuchtungsvorrichtung anordnen bzw. montieren lassen. Alternativ ist es natürlich auch möglich, jedem Fluidauslass mit einer düsenartigen Verengung eine Ventileinrichtung nach der Erfindung vorzuschalten, die nicht in einem gemeinsamen Gehäuse mit dem Fluidauslass untergebracht ist.

Bei der bevorzugten Einbringung in einem gemeinsamen Gehäuse kann weiterhin ein Anschlussstutzen vorgesehen sein, der den Fluideinlass definiert, über den sich die Baueinheit bzw. das Düsengehäuse an einem Düsenstock anschließen, insbesondere anschrauben lässt. Eine mit mehreren Gruppen der erfindungsgemäßen Einspritzmittel bestückte Luftbefeuchtungsvorrichtung lässt sich dann vergleichsweise einfach montieren.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigt
- FIG 1: eine Ausführungsform der erfindungsgemäßen Luftbefeuchtungsvorrichtung in schematischer Darstellung und
- FIG 2: eine Explosionsdarstellung einer Ausführungsform eines fakultativ einsetzbaren Einspritzmittels im Längsschnitt.

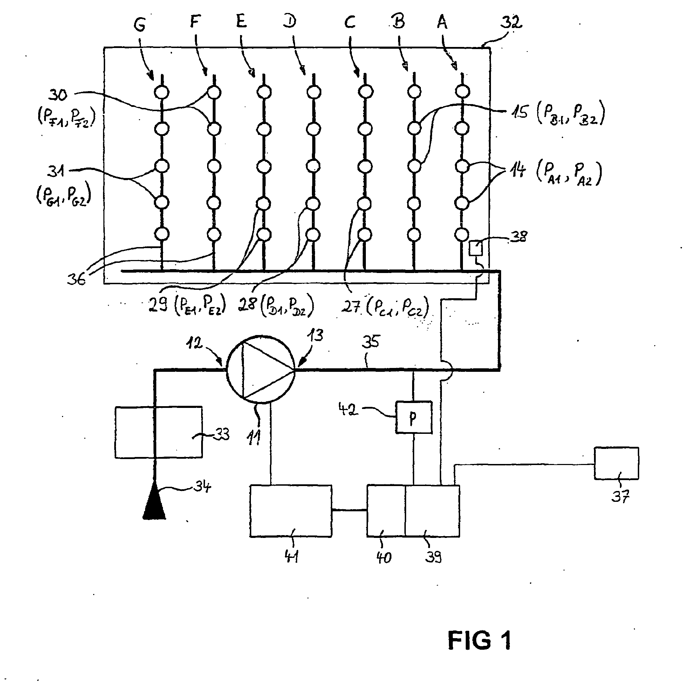

In FIG 1 ist eine Ausführungsform der erfindungsgemäßen Luftbefeuchtungsvorrichtung in schematischer Darstellung gezeigt. Eine Hochdruckpumpe 11 weist einen Pumpeneingang 12 und einen Pumpenausgang 13 auf. Der Pumpeneingang ist über eine Reinigungseinrichtung 33 direkt an einen Frischwasserzulauf 34 ohne Zwischenschaltung eines Vorratsbehälters angeschlossen. Das vom Frischwassernetz über den Frischwasserzulauf 34 zugeführte Wasser wird in der Reinigungseinrichtung 33 entkalkt, durch umgekehrte Osmose gereinigt und gelangt von dort als voll entsalztes Wasser direkt zur Hochdruckpumpe 11. Von der Hochdruckpumpe 11 aus führt eine gemeinsame Versorgungsleitung 35 in eine Befeuchtungskammer 32.

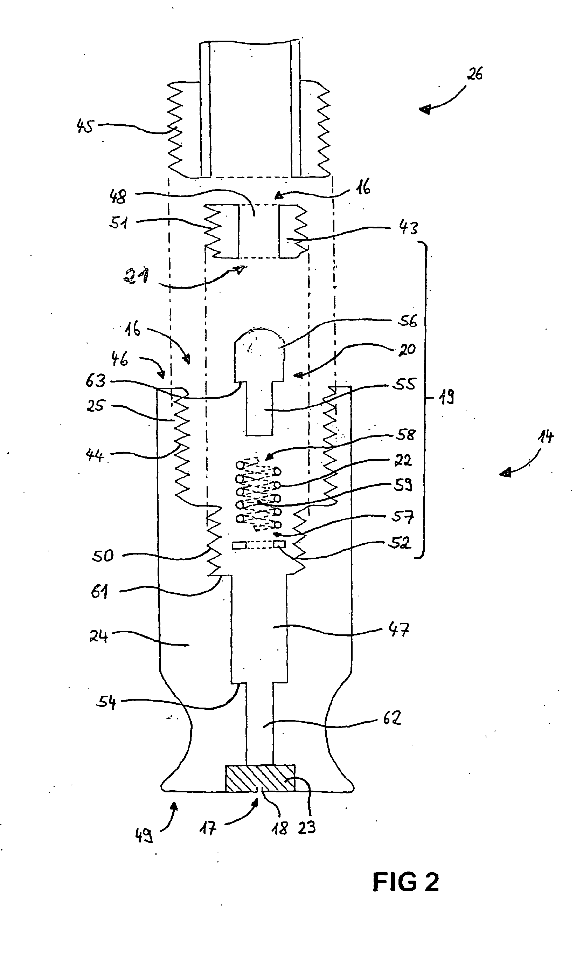

In der Befeuchtungskammer 32 verzweigt die gemeinsame Versorgungsleitung 35 in sieben Leitungsstränge 36, die als Düsenstock 26 zur Anbringung von Einspritzmitteln 14, 15, 27, 28, 29, 30, 31 ausgebildet sind (vgl. FIG 2). Dabei ist an je einem Leistungsstrang 36 jeweils eine Gruppe von Einspritzmitteln A, B, C, D, E, F, G angeordnet. Jede Gruppe A, ..., G umfasst identische Einspritzmittel, Gruppe A die Einspritzmittel 14, Gruppe B die Einspritzmittel 15, Gruppe C die Einspritzmittel 27, Gruppe D die Einspritzmittel 28, Gruppe E die Einspritzmittel 29, Gruppe F die Einspritzmittel 30 und Gruppe G die Einspritzmittel 31.

Der grundsätzliche Aufbau der Einspritzmitteln 14, 15, 27, ..., 31 entspricht FIG 2. Jedes Einspritzmittel 14, 15, 27, 28, 29, 30, 31 ist dabei derart ausgebildet, dass es ab einem Schwellendruck P_{A1}, P _{B1}, P_{C1}, P_{D1}, P_{E1}, P_{F1}, P_{G1} in den Leitungen 35, 36 selbständig öffnet, d.h. von einem geschlossenen in einen geöffneten Zustand übergeht, und ab einem Schließdruck P_{A2}, P_{B2}, P_{C2}, P_{D2}, P_{E2}, P_{F2}, P_{G2} in den Leitungen 35, 36 selbständig wieder aus dem geöffneten in den geschlossenen Zustand übergehen. In der vorliegenden Ausführungsform ist ferner vorgesehen, dass bei jedem der Einspritzmittel 14, 15, 27, ..., 31 jeweils der Schwellendruck P_{A1}, ..., P_{G1}, und der Schließdruck P_{A2}, ..., P_{G2} im Wesentlichen gleich groß sind.

Die identischen Einspritzmittel 14, 15, 27, ..., 31 einer Gruppe A, ..., G weisen dabei im Vergleich zueinander einen im Wesentlichen identischen Schwellendruck P_{A1}, ..., P_{G1} und einen im Wesentlichen identischen Schließdruck P_{A2}, ..., P_{G2} auf.

Die Einspritzmittel 14, 15, 27, ..., 31 verschiedener Gruppe A, ..., G unterscheiden sich hingegen hinsichtlich ihres Schwellendruckes P_{A1}, ..., P_{G1} und ihres Schließdruckes P_{A2}, ..., P_{G2}. Dabei sind die Drücke in der dargestellten Ausführungsform derart gewählt, dass sich sowohl die Schwellendrücke P_{A1}, ..., P_{G1} als auch die Schließdrücke P_{A2}, ..., P_{G2} der Einspritzmittel 14, 15, 27, ..., 31 zwischen den einzelnen Gruppen A, ..., G um etwa 15 bar unterscheiden. Die Einspritzmittel 14 der Gruppe A weisen dabei den kleinsten Schwellendruck, etwa 0,5 bar auf. Dann steigt der Schwellendruck in der Reihenfolge der Gruppen an, d.h. der Schwellendruck der Einspritzmittel 15 der Gruppe B ist etwa 15 bar größer und liegt bei etwa 15,5 bar, der Schwellendruck der Einspritzmittel 27 der Gruppe C ist wiederum etwa 15 bar größer und liegt bei etwa 30,5 bar, usw. (analog Gruppe D, E, F und schließlich G).

In der in FIG 1 dargestellten Ausführungsform sind an jedem der Leitungsstränge 36 jeweils fünf identische Einspritzmittel 14, 15, 27, ..., 31 angeordnet. Somit umfasst jede der Gruppen A, ..., G jeweils fünf Einspritzmittel 14, 15, 27, ..., 31. Selbstverständlich ist aber auch eine unterschiedliche Anzahl an Einspritzelementen in den jeweiligen Gruppen möglich und in vielen Anwendungsfällen auch sinnvoll.

Die hier beschriebene Ausführungsform ist für den Betrieb in einer Befeuchtungskammer 32 ausgelegt. Prinzipiell lässt sich die Anordnung aber auch bei direkter Luftbefeuchtung anwenden. Einsatzzwecke sind neben der Befeuchtung eines zu befeuchtenden Raumes, alternativ und/oder ergänzend die Kühlung eines Luft-oder Gasstromes oder von Kühlmitteln oder Rückkühlmedien. Die letztgenannten Anwendungen schließen adiabatische Kühlung und freie Kühlungen ein, wie sie herkömmlicherweise über Kühltürme erzielt werden. Für derartige Kühlverfahren wird auf den Offenbarungsgehalt der PCT/EP 02/08760 Bezug genommen.

In FIG 1 ist ferner zu erkennen, dass ein Raumfeuchtefühler 37, der wahlweise im zu befeuchtenden Raum oder im Abluftkanal angeordnet sein kann, und ein Zuluftfeuchtefühler 38 vorgesehen sind, wobei der Zuluftfeuchtefühler 38 unmittelbar nach der Befeuchtungskammer 32 angeordnet ist. Der Raumfeuchtefühler 37 und der Zuluftfeuchtefühler 38 stehen mit einer Feuchtesteuerung 39 in Verbindung. Die Feuchtesteuerung 39 wiederum steht mit einer Pumpensteuerung 40 in Verbindung. Die Pumpensteuerung 40 steuert die Hochdruckpumpe 11 über einen Frequenzumrichter 41 basierend auf dem Signal der bereits genannten Feuchtesteuerung 39. Zu Überwachungszwecken kann weiterhin ein Drucksensor 42 den Druck in der Versorgungsleitung 35 erfassen und ggf. in der Pumpensteuerung 40 ergänzend berücksichtigt werden. Erfindungsgemäß ist aber eine Druckerfassung in der Versorgungsleitung 35 nicht notwendig, da die Einspritzmittel 27 bis 31 die jeweils erforderliche Wassermenge durch den vorgegebenen Pumpendruck selbst einstellen.

Die Funktion der Luftbefeuchtungsvorrichtung nach FIG 1 wird nachfolgend beschrieben. Grundsätzlich erfolgt die Luftbefeuchtung in der Luftbefeuchtungsvorrichtung, indem in die Luft bzw. den Luftstrom in der Befeuchtungskammer 32 eine bestimmte Gesamtwassermenge eingesprüht wird. Die Gesamtwassermenge ist dabei regelbar über den Wasserdruck, den die Hochdruckpumpe 11 in den Leitungen 35, 36 erzeugt.

Dabei gilt zunächst grundsätzlich, dass die Wassermenge, mit der ein einzelnes Einspritzmittel 14, 15, 27, ..., 31 zur Gesamtwassermenge beiträgt, abhängig ist vom Wasserdruck, der von der Hochdruckpumpe 11 erzeugt wird. Je höher der Druck, desto größer ist auch die eingesprühte Wassermenge des einzelnen Einspritzmittels 14, 15, 27, ..., 31. In der beschriebenen Luftbefeuchtungsvorrichtung gilt aber ferner, dass jedes Einspritzmittel 14, 15, 27, ..., 31 einen bestimmten Schwellendruck P_{A1}, ..., P_{G1} aufweist. Demzufolge kann ein Einspritzmittel 14, 15, 27, ..., 31 erst ab Überschreiten dieses Schwellenwertes P_{A1}, ..., P_{G1} überhaupt zur Gesamtwassermenge beitragen.

Dies hat konkret zur Folge, dass in einem Druckbereich von 0,5 bar bis 15,5 bar nur die Einspritzmittel 14 der Gruppe A zur Gesamtwassermenge beitragen. Die Gesamtwassermenge ist dabei über den von der Hochdruckpumpe 11 erzeugten Druck innerhalb des genannten Druckbereichs regulierbar. Die innerhalb dieses Druckbereichs maximal erzeugbare Gesamtwassermenge wird dabei an der oberen Bereichsgrenze, also bei etwa 15,5 bar erreicht. Reicht diese maximale Gesamtwassermenge dieses Druckbereichs nicht aus, so wird der von der Hochdruckpumpe 11 erzeugte Wasserdruck über den Schwellendruch P_{B1} der Einspritzmittel 15 der Gruppe B, hier 15,5 bar, erhöht und damit die Einspritzmittel 15 der Gruppe B geöffnet. Nunmehr tragen im Druckbereich von 10,5 bar bis 30,5 bar die Einspritzmittel 14 und 15 der Gruppen A und B zur Gesamtwassermenge bei. Diese ist auch innerhalb dieses Druckbereichs über den von der Hochdruckpumpe 11 erzeugten Wasserdruck regelbar. Ist auch die nunmehr erreichbare Wassermenge noch nicht ausreichend, so werden Schritt für Schritt durch Überschreitung der jeweiligen Schwellendrücke P_{C1}, ..., P_{G1} die Einspritzmittel 27, ..., 31 der weiteren Gruppen C bis G hinzugeschaltet.

Ist die eingesprühte Gesamtwassermenge hingegen zu groß, so werden die einzelnen Gruppen durch Absenken des von der Hochdruckpumpe 11 erzeugten Wasserdruckes unterhalb des jeweiligen Schließdruckes P_{A2}, ..., P_{G2} der Einspritzmittel in umgekehrter Reihenfolge abgeschaltet.

Die Steuerung der Hochdruckpumpe und damit des von dieser erzeugten Wasserdrucks in den Leitungen erfolgt bei den beschriebenen Vorgängen über die Pumpensteuerung 40, die hierzu Signale der Feuchtesteuerung 39 und ggf. ergänzend, aber nicht notwendigerweise des Drucksensors 42 verarbeitet.

Durch die beschriebene Funktionsweise der Luftbefeuchtungsvorrichtung nach FIG 1 wird erreicht, dass eine geringe Gesamtwassermenge nur durch eine kleine Anzahl an Einspritzmitteln, beispielsweise nur durch die Einspritzmittel 14 der Gruppe A, erzeugt wird. Die anderen Einspritzmittel bleiben in diesem Fall geschlossen. Dadurch ist bei einer derartigen Anordnung der erforderliche Wasserdruck in den Leitungen zur Erzeugung geringer Gesamtwassermengen deutlich höher als bei Erzeugung der gleichen Gesamtwassermenge mit allen vorhandenen Einspritzmitteln. Die mit einem niedrigen Wasserdruck verbundene Gefahr des Tröpfelns der Einspritzmittel wird durch die beschriebene Anordnung daher deutlich reduziert. Die für die Erzeugung großer Wassermengen erforderliche Zahl an Einspritzmitteln wird Schritt für Schritt durch Zuschalten der weiteren Gruppen B, ..., G erreicht.

FIG 2 zeigt eine Explosionsdarstellung einer Ausführungsform eines Einspritzmittels 14. Die dargestellten einzelnen Komponenten werden in vertikaler Richtung ineinander gefügt. Zu sehen ist jeweils eine vertikale Schnittdarstellung der Komponenten.

Das Einspritzmittel 14 umfasst ein Düsengehäuse 24 mit einem Fluideinlass 16 an einer ersten Seite 46 und einem Fluidauslass 17 an einer der ersten Seite 46 gegenüberliegenden zweiten Seite 49. Das Düsengehäuse 24 weist auf der ersten Seite 46 ein erstes Innengewinde 44 auf. Das erste Innengewinde 44 definiert einen Anschlussstutzen 25, mit dem das Einspritzmittel 14 an einem Düsenstock 26 anschraubbar ist. Hierzu weist der Düsenstock 26 ein erstes Außengewinde 45 auf, das mit dem ersten Innengewinde 44 des Düsengehäuses 24 korrespondiert. Über den Düsenstock 24 wird dem Einspritzmittel 14 ein unter Druck stehendes Fluid zugeführt.

Ebenfalls auf der ersten Seite 46 des Düsengehäuses 24, unterhalb des ersten Innengewindes 44, ist im Düsengehäuse 24 ein zweites Innengewinde 50 mit einem im Vergleich zum ersten Innengewinde 44 kleineren Gewindedurchmesser ausgebildet. In dem zweiten Innengewinde 50 ist ein Körper 43 mit einem zweiten, zum zweiten Innengewinde 44 korrespondierenden Außengewinde 51 durch Einschrauben befestigbar. Der Körper 43 weist in seiner Mitte ein Durchgangsloch 48 auf. Ist der Körper 43 im Düsengehäuse 24 befestigt, so bildet das Durchgangsloch 48 an seinem äußeren Ende den Fluideinlass 16 des Einspritzmittels 14 und an seinem inneren Ende einen Ventilsitz 21 als Bestandteil einer Ventileinrichtung 19.

Mit der Befestigung des Körpers 43 im Düsengehäuse 24 wird gleichzeitig die Ventileinrichtung 19 in einer ersten Ausnehmung 47 des Düsengehäuses 24, zwischen einer Unterseite 54 der ersten Ausnehmung 47 und dem Körper 43, ausgebildet. Die Ventileinrichtung 19 umfasst eine Lochscheibe 52, eine Spiralfeder 22, einen Ventilkolben 20, der einen Schaft 55 und ein vorderes Ende 56 aufweist, sowie den bereits erwähnten Ventilsitz 21.

Die Spiralfeder 22 weist eine erste Seite 57, eine der ersten Seite 57 gegenüber liegende zweite Seite 58 und einen Innenraum 59 auf. Bei Zusammensetzen der Ventileinrichtung 19 in der ersten Ausnehmung 47 durch Befestigung des Körpers 43 im Düsengehäuse 24 befindet sich die Spiralfeder 22 im gespannten Zustand, d.h. die Feder ist in ihrer Längsrichtung, d.h. zwischen ihrer ersten Seite 57 und ihrer zweiten Seite 58, zusammengedrückt. Dadurch drückt die Spiralfeder 22 mit ihrer ersten Seite 57 die unter ihr angeordnete Lochscheibe 52 gegen die Unterseite 54 der ersten Ausnehmung 47. Der Ventilkolben 20 ist an der zweiten Seite 58 der Spiralfeder 22 angeordnet. Der Schaft 55 des Ventilkolbens 22 befindet sich vollständig im Innenraum 59 der Spiralfeder, so dass die Spiralfeder mit ihrer zweiten Seite 58 gegen eine Rückseite 63 des vorderen Endes 56 des Ventilkolbens 20 drückt und das vordere Ende 56 des Ventilkolbens damit gegen den Ventilsitz 21 presst.

Ohne ausreichenden Gegendruck eines Fluids wird der Ventilsitz 21 somit durch das vordere Ende 56 des Ventilkolbens 20 fluiddicht verschlossen.

Der Körper 43 ist dichtend in das zweite Innengewinde 50 eingeschraubt.

Weist das vom Düsenstock 26 über den Fluideinlass 16 gegen das vordere Ende 56 des Ventilkolbens 20 drückende Fluid allerdings einen Druck oberhalb eines Schwellenwertes P_{A1} auf, so drückt das Fluid das vordere Ende 56 des Ventilkolbens 20 vom Ventilsitz 21 weg. Dabei wird die Spiralfeder 22 weiter in ihrer Längsrichtung, d.h. zwischen ihrer ersten Seite 57 und ihrer zweiten Seite 58, zusammengedrückt. Nunmehr kann Fluid über das Durchgangsloch 48 und den Ventilsitz 21 in die erste Ausnehmung 47 des Düsengehäuses 24 eindringen.

An der Unterseite 54 der ersten Ausnehmung 47 befindet sich eine zweite Ausnehmung 62 des Düsengehäuses 24, deren Durchmesser kleiner ist als der Durchmesser der erste Ausnehmung 47. Diese zweite Ausnehmung 62 verbindet die erste Ausnehmung 47 mit dem Fluidauslass 17, der von einer düsenartigen Verengung 18 gebildet wird. Der Fluidauslass 17 ist eingebettet in eine Drallerzeugungseinrichtung 23. Somit gelangt das Fluid, nachdem es in die erste Ausnehmung 47 des Düsengehäuses 24 eingedrungen ist, über die zweite Ausnehmung 62 des Düsengehäuses 24 und die Drallerzeugungseinrichtung 23 zum Fluidauslass 17. Dort tritt das Fluid als Sprühstrahl mit aufgeprägtem Drall aus dem Düsengehäuse 24 und damit aus dem Einspritzmittel 14 aus.

Sinkt der Druck des Fluids unter einen Schließdruck P_{A2} ab, so wird das vordere Ende 56 des Ventilkolbens 20 wieder gegen den Ventilsitz 21 gepresst und damit die erste Ausnehmung 47 des Düsengehäuses 24 gegen das Fluid abgedichtet. Die Ventileinrichtung 19 schließt dadurch, der aus dem Fluidauslass 17 austretende Sprühstrahl versiegt.

Insgesamt liegt damit ein Einspritzmittel 14 vor, das bis zu einem Schwellendruck P_{A1} schließt und bei Erreichung bzw. Überschreitung des Schwellendrucks P_{A1} öffnet und damit einen Sprühstrahl erzeugt. Durch Variation der Ausgestaltung der Ventileinrichtung 19, insbesondere durch Verwendung dickerer oder dünnerer Lochscheiben 52, kann der für ein Öffnen der Einspritzmittel erforderliche Schwellendruck variiert werden. Auf diese Weise lassen sich beispielsweise die in der Luftbefeuchtungsvorrichtung gemäß FIG 1 eingesetzten, sich in ihrem Schwellendruck P_{A1},..., _{G1}, unterscheidenden Einspritzmittel 14, 15, 27, ..., 31 der verschiedenen Gruppen A, ..., G herstellen.

### Bezugszeichenliste

- 11: Hochdruckpumpe
- 12: Pumpeneingang
- 13: Pumpenausgang
- 14, 15: Einspritzmittel
- 16: Fluideinlass
- 17: Fluidauslass
- 18: düsenartige Verengung
- 19: Ventileinrichtung
- 20: Ventilkolben
- 21: Ventilsitz
- 22: Spiralfeder
- 23: Drallerzeugungseinrichtung
- 24: Düsengehäuse
- 25: Anschlussstutzen
- 26: Düsenstock
- 27, 28, 29: Einspritzmittel
- 30, 31: Einspritzmittel
- 32: Befeuchtungskammer
- 33: Reinigungseinrichtung
- 34: Frischwasserzulauf
- 35: Versorgungsleitung
- 36: Leitungsstränge
- 37: Raumfeuchtefühler
- 38: Zuluftfeuchtefühler
- 39: Feuchtesteuerung
- 40: Pumpensteuerung
- 41: Frequenzumrichter
- 42: Drucksensor
- 43: Körper
- 44: erstes Innengewinde
- 45: erstes Außengewinde
- 46: erste Seite
- 47: erste Ausnehmung
- 48: Durchgangsloch
- 49: zweite Seite
- 50: zweites Innengewinde
- 51: zweits Außengewinde
- 52: Lochscheibe
- 54: Unterseite der Ausnehmung 47
- 55: Schaft des Ventilkolbens 20
- 56: vorderes Ende des Ventilkolbens 20
- 57: erste Seite der Spiralfeder 22
- 58: zweite Seite der Spiralfeder 22
- 59: Innenraum der Spiralfeder 22
- 61: Innenfläche
- 62: zweite Ausnehmung
- 63: Rückseite des vorderen Endes 56 des Ventilkolbens 20

- A, B, C, D, E, F, G: Gruppen von Einspritzmitteln
- P_{A1}, P_{B1}, ..., P_{G1}: Schwellendrücke
- P_{A2}, P_{B2}, ..., P_{G2}: Schließdrücke

## Patentansprüche

1. Luftbefeuchtungsvorrichtung, umfassend wenigstens eine Hochdruckpumpe mit einem Pumpeneingang (12) und einem Pumpenausgang (13) und mindestens zwei Gruppen (A, B, ...., G) von Einspritzmitteln (14, 15), wobei die Hochdruckpumpe (11) den Einspritzmitteln (14, 15, 27, ..., 31) bedarfsweise Wasser zuführt, insbesondere zur direkten oder indirekten Befeuchtung eines Raumes oder zu Kühlzwecken,
**dadurch gekennzeichnet,**
**dass** die Einspritzmittel (14, 15, 27, ..., 31) der verschiedenen Gruppen (A, B, ...., G) derart ausgebildet und angeschlossen sind, dass sie bei unterschiedlichen Schwellendrücken P_{A1}, P_{B1}, ... P_{G1} selbständig öffnen.

2. Luftbefeuchtungsvorrichtung nach Anspruch 1,
**dadurch gekennzeichnet,**
**dass** die Einspritzmittel (14) einer ersten Gruppe (A) bei einem Schwellendruck P_{A1} < 10 bar, insbesondere < 1 bar, insbesondere sofort bei Wasserzufuhr durch die Hochdruckpumpe öffnen, wobei die Einspritzmittel (15, 27, ..., 31) einer zweiten und ggf. weiterer Gruppen (B, ..., G) bei P_{A1} zunächst geschlossen bleiben.

3. Luftbefeuchtungsvorrichtung nach Anspruch 1 oder 2,
**dadurch gekennzeichnet,**
**dass** die Einspritzmittel (14, 15, 27, ..., 31) in geöffnetem Zustand bei abfallendem Druck bei einem Schließdruck P_{A2}, P_{B2}, ... P_{G2} schließen, wobei die Einspritzmittel der verschiedenen Gruppen (A, B, ... G) derart ausgebildet und angeschlossen sind, dass der jeweilige Schließdruck P_{A2}, P_{B2}, ... P_{G2} den jeweiligen Schwellendruck P_{A1}, P_{B1}, ... P_{G1} um nicht mehr als 10 bar, vorzugsweise um nicht mehr als 3 bar unterschreitet.

4. Luftbefeuchtungsvorrichtung nach einem der Ansprüche 1 bis 3,
**dadurch gekennzeichnet,**
**dass** drei bis sieben Gruppen (A, B, C, D, E, F, G) von Einspritzmitteln (14, 15, 27, ..., 31) mit unterschiedlichen Schwellendrücken (P_{A1}, P_{B1}, ... P_{G1}) vorgesehen sind und dass die Einspritzmittel (14, 15, 27, ..., 31) der verschiedenen Gruppen (A, B, ... G) derart ausgebildet und angeschlossen sind, dass sich die Schwellendrücke (P_{A1}, P_{B1}, ... P_{G1}) der verschiedenen Gruppen sich um mindestens 10 bar, vorzugsweise um mindestens 15 bar unterscheiden.

5. Luftbefeuchtungsvorrichtung nach einem der Ansprüche 1 bis 4,
**dadurch gekennzeichnet,**
**dass** drei bis sieben Gruppen (A, B, C, D, E, F, G) von Einspritzmitteln (14, 15, 27, ..., 31) mit unterschiedlichen Schwellendrücken (P_{A1}, P_{B1}, ... P_{G1}) vorgesehen sind und dass die Einspritzmittel (14, 15, 27, ..., 31) der verschiedenen Gruppen (A, B, ... G) derart ausgebildet und angeschlossen sind, dass die Schwellendrücke (P_{A1}, P_{B1}, ... P_{G1}) im Wesentlichen in gleichen Schritten ansteigen.

6. Luftbefeuchtungsvorrichtung nach einem der Ansprüche 1 bis 5,
**dadurch gekennzeichnet,**
**dass** die Einspritzmittel (14, 15, 27, ..., 31) eine mit einer definierten Vorspannung beaufschlagte Ventileinrichtung (19) mit einem Ventilkolben (20) und einem Ventilsitz (21) umfassen, die erst bei einem vorbestimmten Schwellendruck (P_{A1}, P_{B1}, ... P_{G1}) öffnet und dabei eine Fluidverbindung zwischen Fluideinlass (16) und Fluidauslass (17) bewirkt.

7. Luftbefeuchtungsvorrichtung nach Anspruch 6,
**dadurch gekennzeichnet,**
**dass** die mit Vorspannung beaufschlagte Ventileinrichtung (19) eine Feder, insbesondere eine Spiralfeder (22) umfasst, welche die definierte Vorspannung bewirkt.

8. Luftbefeuchtungsvorrichtung nach einem der Ansprüche 6 oder 7,
**dadurch gekennzeichnet,**
**dass** der Ventilkolben (20) gegen die Strömungsrichtung des Befeuchtungsfluids durch die Vorspannung, insbesondere die Feder bzw. Spiralfeder (22) in Richtung auf den Ventilsitz (21) beaufschlagt wird.

9. Luftbefeuchtungsvorrichtung nach einem der Ansprüche 6 bis 8,
**dadurch gekennzeichnet,**
**dass** zwischen Fluidauslass (17) und Ventileinrichtung (19) eine Drallerzeugungseinrichtung (23) angeordnet ist, um einem erzeugten Sprühstrahl von Befeuchtungsfluid einen gewünschten Drall aufzuprägen.

10. Luftbefeuchtungsvorrichtung nach einem der Ansprüche 6 bis 9,
**dadurch gekennzeichnet,**
**dass** der Fluidauslass (17) mit der düsenartigen Verengung (18) und die Ventileinrichtung (19) in einer gemeinsamen Baueinheit, insbesondere in einem gemeinsamen Düsengehäuse (24) angeordnet sind.

11. Luftbefeuchtungsvorrichtung nach Anspruch 10,
**dadurch gekennzeichnet,**
**dass** die Baueinheit bzw. das Düsengehäuse (24) über einen Anschlussstutzen (25), der den Fluideinlasss (16) definiert, an einem Düsenstock (26) anschließbar, insbesondere anschraubbar ist.

## Claims

1. Air-humidifying device comprising at least one high-pressure pump having a pump input (12) and a pump output (13) and at least two groups (A, B, ...., G) of injection means (14, 15), wherein the high-pressure pump (11) supplies, if required, water to the injection means (14, 15, 27, ..., 31), in particular for direct or indirect humidifying of a room or for cooling purposes, **characterised in that** the injection means (14, 15, 27, ..., 31) of the various groups (A, B, ...., G) are designed and connected such that they open independently at different threshold pressures P_{A1}, P_{B1}, ... P_{G1}.

2. Air-humidifying device according to claim 1, **characterised in that** the injection means (14) of a first group (A) open at a threshold pressure P_{A1} < 10 bar, in particular < 1 bar, in particular immediately on water supply by the high-pressure pump, wherein the injection means (15, 27, ...,31) of a second and optionally further groups (B, ..., G) initially remain closed at P_{A1}.

3. Air-humidifying device according to claim 1 or 2, **characterised in that** the injection means (14, 15, 27, ..., 31) in the opened state, close when the pressure drops at a closing pressure P_{A2}, P_{B2}, ... P_{G2}, wherein the injection means of the various groups (A, B, ... G) are designed and connected such that the particular closing pressure P_{A2}, P_{B2}, ... P_{G2} is below the particular threshold pressure P_{A1}, P_{B1}, ... P_{G1} by not more than 10 bar, preferably by not more than 3 bar.

4. Air-humidifying device according to one of claims 1 to 3, **characterised in that** three to seven groups (A, B, C, D, E, F, G) of injection means (14, 15, 27, ..., 31) having different threshold pressures (P_{A1}, P_{B1}, ... P_{G1}) are provided and **in that** the injection means (14, 15, 27, ..., 31) of the various groups (A, B, ... G) are designed and connected such that the threshold pressures (P_{A1}, P_{B1}, ... P_{G1}) of the various groups differ by at least 10 bar, preferably by at least 15 bar.

5. Air-humidifying device according to one of claims 1 to 4, **characterised in that** three to seven groups (A, B, C, D, E, F, G) of injection means (14, 15, 27, ..., 31) having different threshold pressures (P_{A1}, P_{B1}, ... P_{G1}) are provided and **in that** the injection means (14, 15, 27, ..., 31) of the various groups (A, B, ... G) are designed and connected such that the threshold pressures (P_{A1}, P_{B1}, ... P_{G1}) rise essentially in equal steps.

6. Air-humidifying device according to one of claims 1 to 5, **characterised in that** the injection means (14, 15, 27, ..., 31) comprise a valve device (19), which is exposed to a defined pretension, having a valve piston (20) and a valve seat (21), which opens only at a predetermined threshold pressure (P_{A1}, P_{B1}, ... P_{G1}) and thus effects a fluid connection between fluid inlet (16) and fluid outlet (17).

7. Air-humidifying device according to claim 6, **characterised in that** the valve device (19) which is exposed to pretension comprises a spring, in particular a helical spring (22), which effects the defined pretension.

8. Air-humidifying device according to one of claims 6 or 7, **characterised in that** the valve piston (20) is impinged against the flow direction of the humidifying liquid by the pretension, in particular the spring or helical spring (22), in the direction of the valve seat (21).

9. Air-humidifying device according to one of claims 6 to 8, **characterised in that** a turbulence-producing device (23) is arranged between fluid outlet (17) and valve device (19) in order to impose a required turbulence on a spray jet of humidifying fluid which is produced.

10. Air-humidifying device according to one of claims 6 to 9, **characterised in that** the fluid outlet (17) with the nozzle-like constriction (18) and the valve device (19) are arranged in a common constructional unit, in particular in a common nozzle housing (24).

11. Air-humidifying device according to claim 10, **characterised in that** the constructional unit or the nozzle housing (24) can be connected, in particular can be screwed, to a nozzle connection (26) via a connecting adapter (25) which defines the fluid inlet (16).

## Revendications

1. Dispositif d'humidification d'air, comprenant au moins une pompe haute pression avec une entrée de pompe (12) et une sortie de pompe (13) et au moins deux groupes (A, B, ...., G) de moyens d'injection (14, 15), dans lequel la pompe haute pression (11) envoie de l'eau aux moyens d'injection (14, 15, 27, ..., 31) en fonction des besoins, en particulier pour l'humidification directe ou indirecte d'une pièce ou à des fins de refroidissement, **caractérisé en ce que** les moyens d'injection (14, 15, 27, ..., 31) des différents groupes (A, B, ...., G) sont configurés et raccordés de façon à s'ouvrir automatiquement à différents seuils de pression P_{A1}, P_{B1}, ... P_{G1}.

2. Dispositif d'humidification d'air selon la revendication 1, **caractérisé en ce que** les moyens d'injection (14) d'un premier groupe (A) s'ouvrent à un seuil de pression P_{A1} < 10 bars, en particulier < 1 bar, notamment tout de suite après leur alimentation en eau par la pompe haute pression, tandis que les moyens d'injection (15, 27, ..., 31) d'un deuxième groupe et le cas échéant d'autres groupes (B, ..., G) restent dans un premier temps fermés à P_{A1}.

3. Dispositif d'humidification d'air selon la revendication 1 ou la revendication 2, **caractérisé en ce que** les moyens d'injection (14, 15, 27, ..., 31) à l'état ouvert se ferment lorsque la pression chute à une pression de fermeture P_{A2}, P_{B2}, ... P_{G2}, les moyens d'injection des différents groupes (A, B, ... G) étant configurés et raccordés de telle façon que chaque pression de fermeture P_{A2}, P_{B2}, ... P_{G2} ne descende pas de plus de 10 bars, de préférence pas de plus de 3 bars, en dessous du seuil de pression P_{A1}, P_{B1}, ... P_{G1} correspondant.

4. Dispositif d'humidification d'air selon l'une des revendications 1 à 3, **caractérisé en ce qu'**il est prévu de trois à sept groupes (A, B, C, D, E, F, G) de moyens d'injection (14, 15, 27, ..., 31) avec différents seuils de pression (P_{A1}, P_{B1}, ... P_{G1}) et **en ce que** les moyens d'injection (14, 15, 27, ..., 31) des différents groupes (A, B, ... G) sont configurés et raccordés de telle façon que les seuils de pression (P_{A1}, P_{B1}, ... P_{G1}) des différents groupes diffèrent d'au moins 10 bars, de préférence d'au moins 15 bars.

5. Dispositif d'humidification d'air selon l'une des revendications 1 à 4, **caractérisé en ce qu'**il est prévu de trois à sept groupes (A, B, C, D, E, F, G) de moyens d'injection (14, 15, 27, ..., 31) avec différents seuils de pression (P_{A1}, P_{B1}, ... P_{G1}) et **en ce que** les moyens d'injection (14, 15, 27, ..., 31) des différents groupes (A, B, ... G) sont configurés et raccordés de telle façon que les seuils de pression (P_{A1}, P_{B1}, ... P_{G1}) augmentent par pas sensiblement égaux.

6. Dispositif d'humidification d'air selon l'une des revendications 1 à 5, **caractérisé en ce que** les moyens d'injection (14, 15, 27, ..., 31) comprennent un agencement de soupape (19) auquel est appliquée une précontrainte définie, avec un piston de soupape (20) et un siège de soupape (21), qui s'ouvre seulement à un seuil de pression (P_{A1}, P_{B1}, ... P_{G1}) prédéterminé et établit ainsi une communication fluide entre l'entrée de fluide (16) et la sortie de fluide (17).

7. Dispositif d'humidification d'air selon la revendication 6, **caractérisé en ce que** l'agencement de soupape (19) auquel est appliquée une précontrainte comprend un ressort, en particulier un ressort spiral (22), qui assure la précontrainte définie.

8. Dispositif d'humidification d'air selon l'une des revendications 6 ou 7, **caractérisé en ce que** le piston de soupape (20) est chargé contre le sens d'écoulement du fluide humidificateur par la précontrainte, en particulier par le ressort ou ressort spiral (22), en direction du siège de soupape (21).

9. Dispositif d'humidification d'air selon l'une des revendications 6 à 8, **caractérisé en ce qu'**un dispositif générateur de giration (23) est disposé entre la sortie de fluide (17) et l'agencement de soupape (19) afin d'imprimer un mouvement giratoire voulu au jet de pulvérisation de fluide humidificateur produit.

10. Dispositif d'humidification d'air selon l'une des revendications 6 à 9, **caractérisé en ce que** la sortie de fluide (17) avec le rétrécissement en forme de buse (18) et l'agencement de soupape (19) sont disposés dans un module commun, en particulier dans un boîtier de buse (24) commun.

11. Dispositif d'humidification d'air selon la revendication 10, **caractérisé en ce que** le module ou le boîtier de buse (24) peut être relié, en particulier vissé, à un corps de buse (26) au moyen d'un raccord (25) qui définit l'entrée de fluide (16).
